(19) Europäisches Patentamt
European Patent Office
Office européen des brevets

(11) **EP 3 865 815 A1**

(12) **EUROPEAN PATENT APPLICATION**
published in accordance with Art. 153(4) EPC

(43) Date of publication:
**18.08.2021 Bulletin 2021/33**

(21) Application number: **19870226.8**

(22) Date of filing: **20.09.2019**

(51) Int Cl.:
*G01C 3/06* (2006.01)    *B60W 40/02* (2006.01)
*G06T 7/00* (2017.01)    *G06T 7/593* (2017.01)
*G08G 1/16* (2006.01)

(86) International application number:
**PCT/JP2019/036911**

(87) International publication number:
**WO 2020/075476 (16.04.2020 Gazette 2020/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.10.2018 JP 2018192881**

(71) Applicant: **Hitachi Astemo, Ltd.**
**Hitachinaka-shi, Ibaraki 312-8503 (JP)**

(72) Inventor: **TAKADA, Masashi**
**Hitachinaka-shi, Ibaraki 312-8503 (JP)**

(74) Representative: **MERH-IP Matias Erny Reichl Hoffmann**
**Patentanwälte PartG mbB**
**Paul-Heyse-Strasse 29**
**80336 München (DE)**

(54) **VEHICLE-MOUNTED SYSTEM**

(57)     Provided is a vehicle-mounted system that makes cost reduction and adaptation to various sensor configurations possible by appropriately controlling a distance-measurement angle of view and detectable distance for stereo vision. This vehicle-mounted system comprises: an external environment detection unit comprising at least one sensor for detecting an object of observation near a vehicle; an external environment recognition unit for recognizing the environment around the vehicle on the basis of the result of the detection by the external environment detection unit; a vehicle plan determination unit for generating a vehicle path plan on the basis of the result of the recognition by the external environment recognition unit; and a vehicle control unit for controlling the behavior of the vehicle on the basis of the path plan from the vehicle plan determination unit. The external environment detection unit comprises an image processing device that serves as the sensor and detects the object of observation using stereo vision. The image processing device changes the range of the stereo vision on the basis of at least one from among the path plan from the vehicle plan determination unit, information about the sensor configuration of the external environment detection unit, and the sensor reliability of the result of the detection by the external environment detection unit.

*FIG. 1*

EP 3 865 815 A1

**Description**

Technical Field

The present invention relates to a vehicle mounted system, and more particularly to, a vehicle mounted system using an image processing technique in stereoscopy.

Background Art

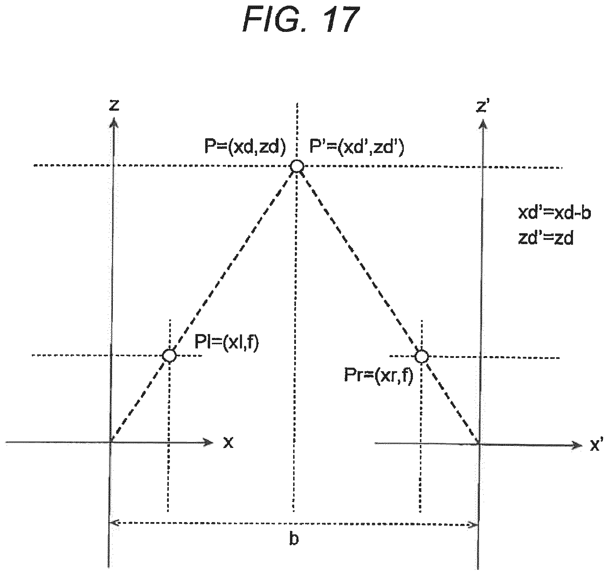

As a three-dimensional measurement technique using an image, a stereoscopy technique for obtaining a distance of an object from an image captured by a stereo camera has been known. FIG. 17 illustrates a principle of stereoscopy. Here, for the sake of simplicity, it is assumed that specifications of two cameras are the same and their optical axes are parallel to an xz plane (y coordinates are the same, which is not illustrated). Assuming that a baseline length between the two cameras is b and a focal length of the camera is f, a distance zd in a z-axis direction of an object P can be calculated from the following Equation (1).
[Equation 1]

$$zd = b \times f/(xl - xr)\ldots(1)$$

Here, xl and xr are x coordinates (pixel positions) of the object P projected on the images of the two cameras, and a difference (xl - xr) between the pixel positions is called parallax.
As described above, since the stereoscopy obtains the distance of the object based on the parallax, it is necessary to detect the correct correspondence points xl and xr between images with respect to the object. To detect this corresponding points, a method of using an image of one camera as a reference image, using an image of another camera as a search target image, and searching for a pixel block with a highest correlation within the search target image among a pixel block composed of a plurality of pixel areas within the reference image has been generally used. For the calculation of the correlation value of the pixel block, for example, there are methods such as a sum of absolute difference (SAD), a sum of squared difference (SSD), or the like.
A processing time required to search for the pixel block search depends on an amount of calculation of a correlation value, an angle of view for distance measurement, and a detectable distance. The angle of view for the distance measurement is determined by a pixel area (the number of horizontal pixels $\times$ the number of vertical pixels) in the reference image, and the detectable distance is determined by a pixel search width (the number of horizontal pixels) within an image to be searched. Therefore, it takes a lot of processing time to detect an object from a short distance to a long distance within a wide angle of view. In particular, in recent years, the demand for driving assistance or automatic driving has increased, but for applications of the driving assistance or autonomous driving that requires high real-time performance from imaging to recognition, reducing the processing time becomes an important issue. PTL 1 below discloses a technique for changing an angle of view of distance measurement according to a traveling state and a surrounding environment. Specifically, it is disclosed to shorten the processing time by narrowing the angle of view for the distance measurement or changing the angle of view for the distance measurement according to a bend in a road obtained from a position of a host vehicle and map information, under the assumptions that vehicles are highly likely to travel on motorways when a vehicle speed is high.

Citation List

Patent Literature

PTL 1: JP 2017-129543 A

Summary of Invention

Technical Problem

The conventional technique disclosed in the above PTL 1 is a method of changing an angle of view for distance measurement based on a current vehicle speed or position information, but cannot change the angle of view for the distance measurement in situations where the vehicle speed is low and the position of the host vehicle is at an intersection, which is often seen on general roads. In addition, it is dangerous to change the angle of view for the distance measurement without considering the future behavior of the host vehicle or other vehicles (vehicles around the host vehicle), and as a result, the effect of reducing the processing time cannot be obtained frequently. Therefore, it is necessary to use an arithmetic circuit having a high processing capacity or a circuit scale, which leads to the increase in the product cost. In addition, as an issue from another perspective, it is assumed that a plurality of sensors including a stereo camera will be mounted on the vehicle as means for realizing advanced driving assistance and automatic driving. In this case, since the requirements and the configurations based on the requirements differ depending on types or options of vehicles, a stereo camera that can provide the angle of view for the distance measurement and the detectable distance (hereinafter, referred to as a range in which the angle of view and the distance are combined) suitable for each configuration, and the control technique thereof are required.
The present invention has been made in view of the above circumstances, and an object of the present invention is to provide a vehicle mounted system that can reduce costs and can be adapted to various sensor configurations by appropriately controlling an angle of view for distance measurement and a detectable distance during stereoscopy.

Solution to Problem

To solve the above problem, a vehicle mounted system according to an embodiment of the present invention includes a surroundings detection unit that is equipped with at least one sensor that detects an observation target around the vehicle, a surroundings recognition unit that recognizes a surrounding environment of the vehicle based on the detection result of the surroundings detection unit, a vehicle plan determination unit that generates a track plan of the vehicle based on the recognition result of the surroundings recognition unit, and a vehicle control unit that controls a behavior of the vehicle based on the track plan of the vehicle plan determination unit, in which the surroundings detection unit includes an image processing apparatus that detects the observation target by the stereoscopy as the sensor, and the image processing apparatus changes a stereoscopic range based on at least one of the track plan of the vehicle plan determination unit, sensor configuration information of the surroundings detection unit, or sensor reliability for the detection result of the surroundings detection unit.

Advantageous Effects of Invention

According to the present invention, it is possible to provide the vehicle mounted system that can reduce the costs and can be adapted to various sensor configurations by appropriately controlling the angle of view for the distance measurement and the detectable distance during the stereoscopy.

Problems, configurations, and effects other than the above will be clarified by the description of the following embodiments.

Brief Description of Drawings

[FIG. 1] FIG. 1 is a diagram illustrating a configuration example of a vehicle mounted system according to a first embodiment of the present invention.
[FIG. 2] FIG. 2 is a diagram illustrating a configuration example of a surroundings detection unit illustrated in FIG. 1.
[FIG. 3] FIG. 3 is a diagram illustrating a configuration example of a distance detection unit illustrated in FIG. 2.
[FIG. 4] FIG. 4 is a diagram illustrating a relationship between register setting and processing time of the distance detection unit.
[FIG. 5] FIG. 5 is a diagram exemplifying a stereoscopic possible range by an image processing apparatus and a track of a track plan in space.
[FIG. 6] FIG. 6 is a diagram exemplifying the stereoscopic range changed based on the track plan in space.
[FIG. 7] FIG. 7 is a diagram illustrating the stereoscopic range changed based on the track plan in space.
[FIG. 8] FIG. 8 is a flowchart illustrating an example of a processing flow for controlling a processing load of stereoscopy in the vehicle mounted system according to the first embodiment of the present invention.
[FIG. 9] FIG. 9 is a diagram illustrating a configuration example of a vehicle mounted system according to second and third embodiments of the present invention.
[FIG. 10] FIG. 10 is a diagram illustrating a configuration example of a surroundings detection unit illustrated in FIG. 9.
[FIG. 11] FIG. 11 is a diagram exemplifying a stereoscopic possible range by an image processing apparatus, a range which can be detected by another sensor, and a track of a track plan in space.
[FIG. 12] FIG. 12 is a diagram exemplifying the stereoscopic range changed based on the track plan and sensor configuration information in space.
[FIG. 13] FIG. 13 is a flowchart illustrating an example of a processing flow for controlling a processing load of stereoscopy in a vehicle mounted system according to the second embodiment of the present invention.
[FIG. 14] FIG. 14 is a diagram exemplifying a stereoscopic possible range by an image processing apparatus, a range which can be detected by another sensor, and a track of a track plan in space.
[FIG. 15] FIG. 15 is a diagram exemplifying the stereoscopic range changed based on the track plan, sensor configuration information, and sensor reliability in space.
[FIG. 16] FIG. 16 is a flowchart illustrating an example of a processing flow for controlling a processing load of stereoscopy in a vehicle mounted system according to the third embodiment of the present invention.
[FIG. 17] FIG. 17 is a diagram illustrating a principle of the stereoscopy.

Description of Embodiments

Hereinafter, embodiments of the present invention will be described with reference to the drawings. In the following description, each process is executed by using a processor and a memory, but some or all of the processes performed by the processor may be performed by a hardware circuit.
Further, in the following description, when the same type of elements are described separately, reference numerals are used as in "camera unit 110A" and "camera unit 110B", and when the same type of elements are not described separately, only a common part of reference numerals may be used as in "camera unit 110".

<First Embodiment>

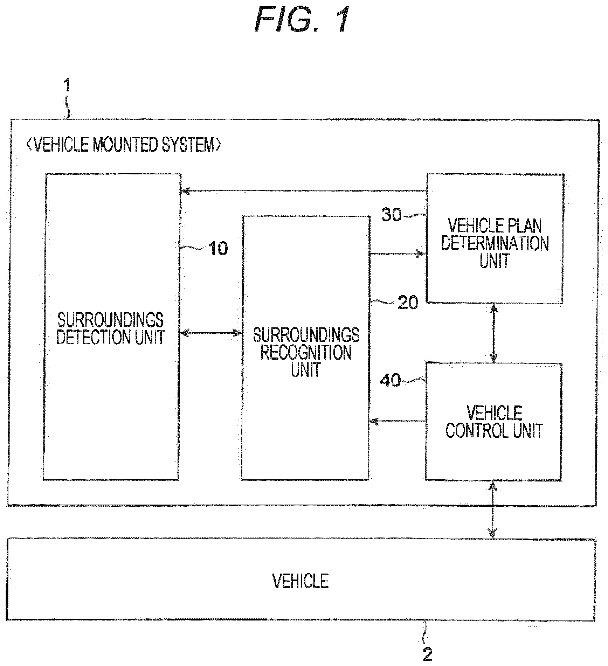

FIG. 1 is a configuration example of a vehicle mounted system 1 according to a first embodiment of the present invention. The vehicle mounted system 1 of the illustrated embodiment is configured to include a surroundings detection unit 10, a surroundings recognition unit 20, a vehicle plan determination unit 30, and a vehicle control unit 40, and is mounted on a vehicle 2.

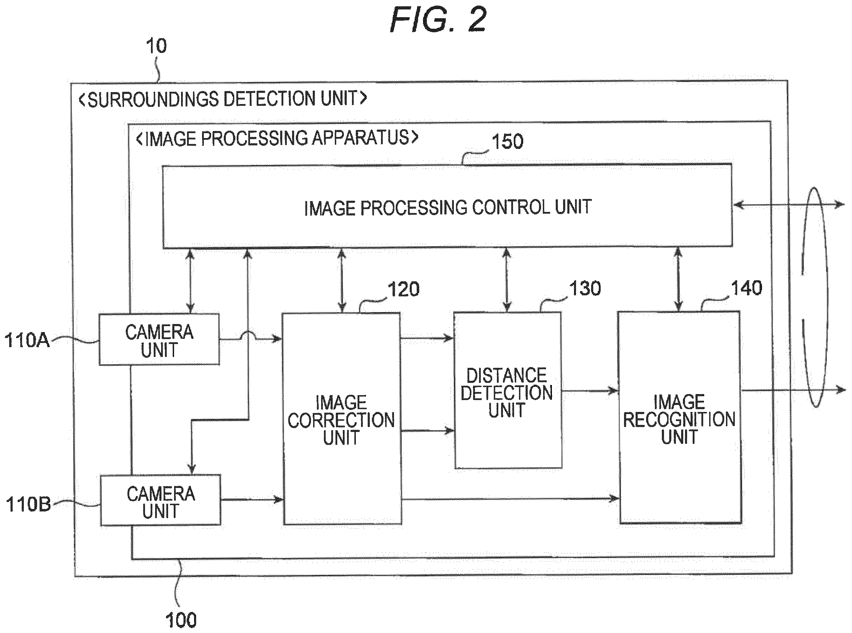

FIG. 2 is a diagram illustrating a configuration example of a surroundings detection unit 10 illustrated in FIG. 1. In this example, the surroundings detection unit 10 includes an image processing apparatus (also referred to as a stereo camera) 100, that detects and recognizes an observation target by stereoscopy, as a sensor for detecting an observation target around (outside) the vehicle 2. The image processing apparatus 100 is configured to include camera units 110A and 110B, an image correction unit 120, a distance detection unit 130, an image recognition unit 140, and an image processing control unit 150. The image processing apparatus 100 (camera units 110A and 110B of the image processing apparatus 100) is installed in front of a windshield so that, for example, a predetermined area in front of the vehicle 2 can be imaged.

The camera units 110A and 110B are constituted by, for example, a CCD or CMOS image sensor, and are arranged at positions where baseline lengths are separated on the left and right (see FIG. 17), and acquire a captured image including an observation target and outputs the acquired captured image to the image correction unit 120. The observation target is, for example, a vehicle, a pedestrian, a bicycle, an obstacle, a structure, a road sign, or the like.

The image correction unit 120 performs, for example, pixel defect correction, brightness correction, camera distortion correction, and the like on the captured images output by the camera units 110A and 110B so that the observation target can be easily detected by the stereoscopy, and outputs the corrected image to the distance detection unit 130. When the camera unit 110 is provided with these functions, the functions may be used.

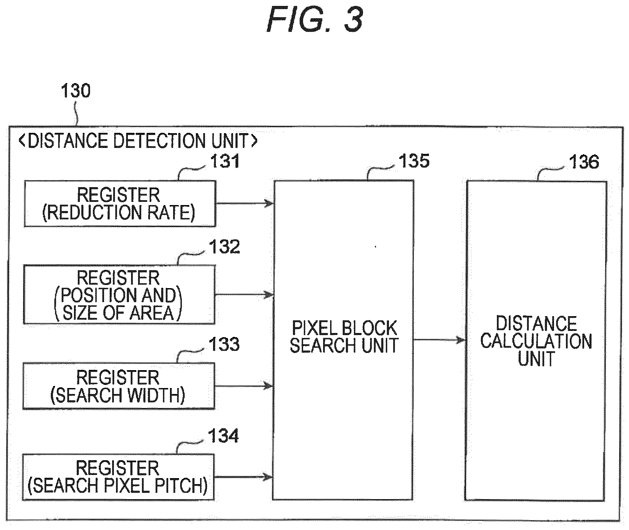

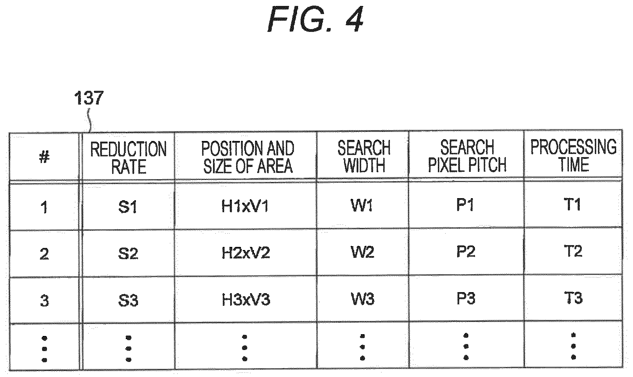

The distance detection unit 130 calculates a distance by the stereoscopy using the corrected image output by the image correction unit 120, and outputs the calculation result to the image recognition unit 140 as distance information. For the calculation of this distance, for example, the above-described methods such as SAD and SSD are used. As illustrated in FIG. 3, the distance detection unit 130 includes a register 131 that sets a reduction rate of the corrected image used for the stereoscopy, a register 132 that sets a position and size of a pixel area, a register 133 that sets a search width during search, a register 134 that sets a search pixel pitch, a pixel block search unit 135 that performs a detection of corresponding points according to the settings of these register, and a distance calculation unit 136 that calculates the distance from the detected corresponding points. Since the processing time of the pixel block search is determined by the number of pixels as described above, the processing time is controlled by the settings of these registers 131 to 134. Here, as an example of the setting of the register, there is a method based on Table 137 (see FIG. 4) including the relationship between the set value and the processing time prepared in advance. For example, when the processing time has a relationship of T1 < T2 < T3 and the time allocable for processing is T2 or less, the stereoscopic range selects a set value that best matches a request from set values # 1 and # 2. Note that the settings of the registers 131 to 134 in the distance detection unit 130 are executed by the image processing control unit 150 described later.

The image recognition unit 140 detects and recognizes the observation target based on the corrected image output from the image correction unit 120 and the distance information output from the distance detection unit 130, and outputs the detected and recognized result to the surroundings recognition unit 20 as recognition information. The recognition information includes position information, type information, operation information, and the like of the detected observation target. The position information is, for example, information indicating the direction, distance, or the like of the observation target with respect to the vehicle 2. The type information is, for example, information indicating the above-described observation target. The operation information is information indicating a moving direction, a moving speed, a moving locus, and the like, such as shaking, rushing out, and crossing of a pedestrian and a bicycle.

The image processing control unit 150 controls the settings of the camera unit 110 and the image correction unit 120 based on the corrected image output from the image correction unit 120. For example, when the ambient brightness changes due to a change in weather or time, the control of the setting adjusts the exposure of the camera unit 110 and adjusts the correction value of the image correction unit 120. In addition, the image processing control unit 150 sets values in the registers 131 to 134 of the distance detection unit 130 based on the indication information output from the vehicle plan determination unit 30 (detailed later), thereby changing the stereoscopic range and controlling the processing load (processing time). As an example of controlling the processing load, for example, there is a method of controlling not to exceed a predetermined processing load.

The surroundings recognition unit 20 illustrated in FIG. 1 combines recognition information output from the surroundings detection unit 10 with map information around the vehicle 2, generates surrounding environment information of the vehicle 2, and outputs the generated surrounding environment information to the vehicle plan determination unit 30. The map information is, for example, a road type, a road shape, a traffic rule, or the like. The road type is information indicating road attributes, such as an alley, a national road, and a highway. The road shape expresses spatial shapes of a road, on a road, and a vicinity (sideways and the like) of the road, and is, for example, shapes of a straight road, a curved road, a T junction, an intersection, and the like, a lane centerline shape or a lane boundary line shape of road surfaces thereof, a lane branch/junction, a shape of a road shoulder in a road section, a roadway part boundary line shape, a stop line shape, a crosswalk shape, and the like. Traffic rules are information that restricts traveling of vehicles, and includes, for example, traffic lights, speed restrictions, lane attributes (passable direction, bus only, passable time zone, and the like), and lane boundary attributes (whether to change a lane, whether to overtake, and the like), and the like, and are basically managed in association with the road type and road shape. Note that the map information may be map information of a navigation device or the like (not shown) stored in advance in the vehicle 2, or map information acquired from the outside. In addition, the surroundings recognition unit 20 may use the captured image obtained by the surroundings detection unit 10 to display an image for the driver of the vehicle 2 to recognize the observation target or provide the information on the observation target to an information device such as the navigation device (not illustrated) mounted on the vehicle 2.

The vehicle plan determination unit 30 generates a track plan indicating at what track and speed the vehicle 2 is controlled based on the surrounding environment information of the vehicle 2 output from the surroundings recognition unit 20 and the state information of the vehicle 2 output from the vehicle control unit 40. Further, the vehicle plan determination unit 30 outputs target control information to the vehicle control unit 40 based on the track plan, and outputs indication information to control the processing load in stereoscopy to the surroundings detection unit 10. The state information of the vehicle 2 is, for example, a vehicle speed, an acceleration, a steering angle, a yaw rate, and the like of the vehicle 2.

The vehicle control unit 40 (automatically) controls the behavior of the vehicle 2 based on the target control information output from the vehicle plan determination unit 30, and outputs the state information of the vehicle 2 to the vehicle plan determination unit 30. The behavior control of the vehicle 2 is, for example, control of a brake, an accelerator, a steering angle, lighting of various lamps, a warning sound, and the like.

In this way, in the vehicle mounted system 1 according to the first embodiment, the vehicle control unit 40 controls the behavior of the vehicle 2 based on the target control information output from the vehicle plan determination unit 30, the vehicle plan determination unit 30 generates the indication information that controls the processing load in stereoscopy based on the generated track plan of the vehicle 2, and the surroundings detection unit 10 (the image processing control unit 150 of image processing apparatus 100 of the surroundings detection unit 10) sets values in the registers 131 to 134 of the distance detection unit 130 based on the indication information output from the vehicle plan determination unit 30 (for example, by selecting the set value that best matches the requirements of the stereoscopic range based on Table 137 (see FIG. 4)), thereby changing the stereoscopic range and controlling the processing load.

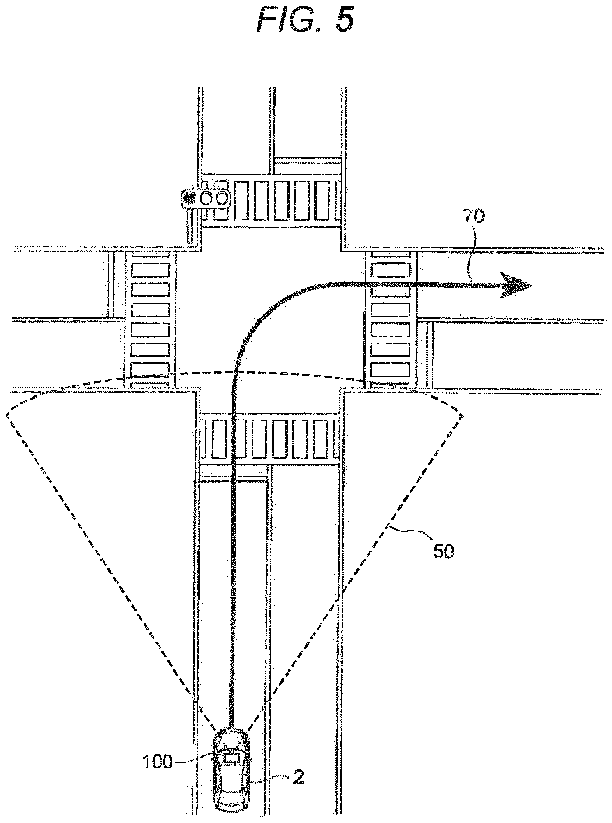

FIG. 5 is an example in which a stereoscopic possible range 50 and a track 70 of the track plan generated by the vehicle plan determination unit 30 in the surroundings detection unit 10 (image processing apparatus 100 of the surroundings detection unit 10) are shown in space. The stereoscopic possible range 50 in the image processing apparatus 100 is a range in which the stereoscopy can be executed in principle using the image captured by the camera unit 110 of the image processing apparatus 100, and does not necessarily match a range that can be executed within the processing time required for the image processing apparatus 100. Since the range that can be executed within the required processing time depends on the processing performance of the image processing apparatus 100, it is effective to extract only the required range from the stereoscopic possible range 50 and perform the stereoscopy in order to reduce the product costs. The track plan shows the future operation of the vehicle 2, and as described above, and the track plan can be used to appropriately determine the range required for stereoscopy of the image processing apparatus 100.

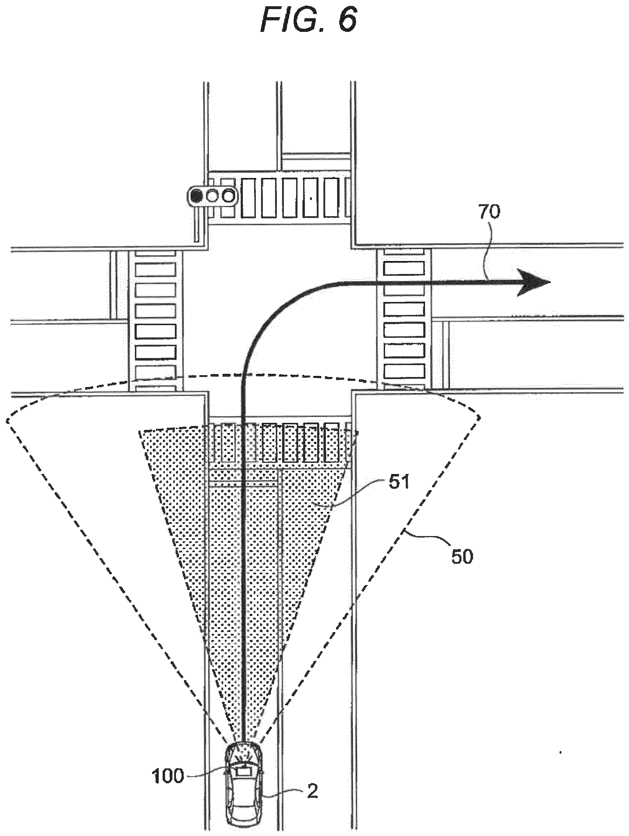

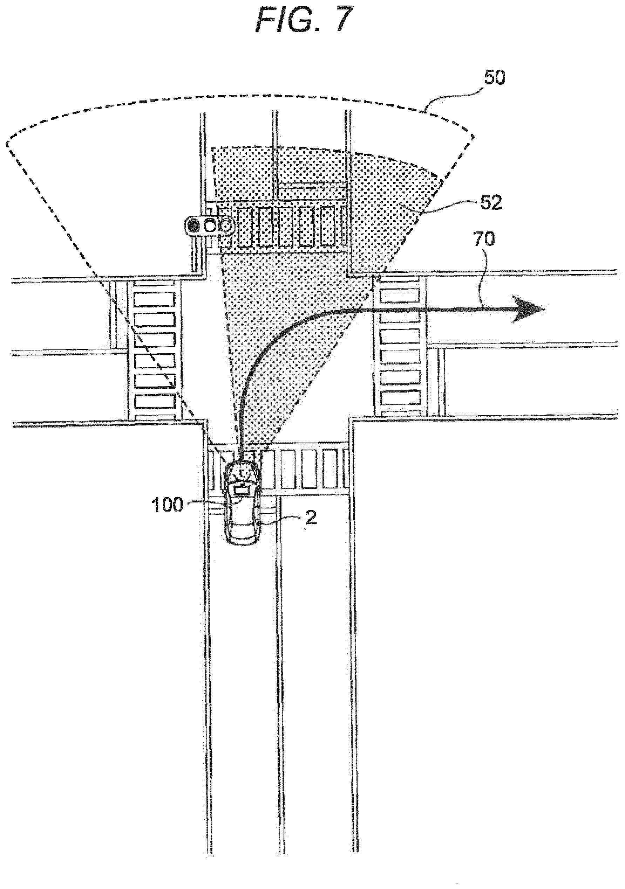

FIGS. 6 and 7 are examples in which stereoscopic ranges 51 and 52 changed based on the track plan are shown in space. This is an example of a track plan in which the "vehicle 2 turns right after going straight to the intersection", but at the position of the vehicle 2 in FIG. 6, the vehicle is scheduled to go straight, and therefore, the image processing apparatus 100 (image processing control unit 150 of the image processing apparatus 100) can reduce the processing time required for the stereoscopy by setting the registers 131 to 134 of the distance detection unit 130 and narrowing a stereoscopic range (in detail, approximately a left and right center range in the stereoscopic possible range 50) to a range 51 in a straight direction. On the other hand, at the position of the vehicle 2 in FIG. 7, the vehicle 2 is scheduled to turn right, and therefore, the image processing apparatus 100 (image processing control unit 150 of the image processing apparatus 100) can reduce the processing time required for the stereoscopy by setting the registers 131 to 134 of the distance detection unit 130 and narrowing a stereoscopic range (in detail, a range of a predetermined angle from a right end of the stereoscopic possible range 50) to a range 52 in a right turn direction. Note that the stereoscopic range is changed from the range 51 in FIG. 6 to the range 52 in FIG. 7, for example, so that the processing time is the same.

Note that when the track plan generated by the vehicle plan determination unit 30 is changed according to the surrounding environment of the vehicle 2 while driving (for example, during driving assistance or automatic driving), the vehicle plan determination unit 30 outputs the indication information to the surroundings detection unit 10 according to the changed track plan, and the image processing apparatus 100 (image processing control unit 150 of the image processing apparatus) of the surroundings detection unit 10 changes/sets the stereoscopic range based on the indication information output from the vehicle plan determination unit 30.

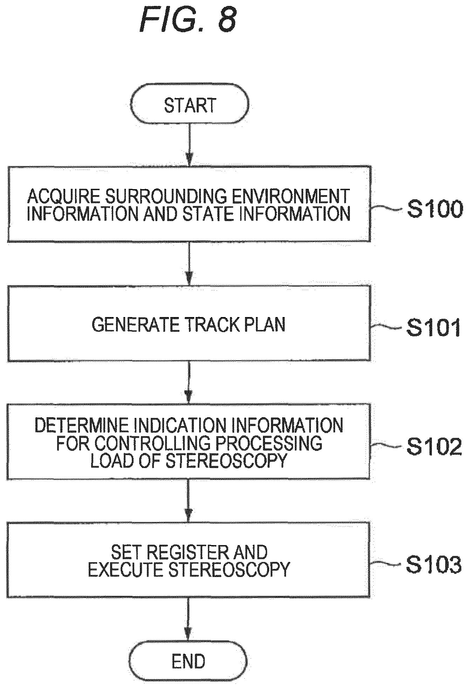

FIG. 8 is an example of a processing flow for controlling a processing load of stereoscopy in the vehicle mounted system 1 according to the first embodiment of the present invention.

In step S100, the vehicle plan determination unit 30 acquires the surrounding environment information of the vehicle 2 output from the surroundings recognition unit 20 and the state information of the vehicle 2 output from the vehicle control unit 40.

In step S101, the vehicle plan determination unit 30 generates the track plan of the vehicle 2 from the information acquired in step S100.

In step S102, the vehicle plan determination unit 30 determines the indication information for controlling the processing load in the stereoscopy executed by the surroundings detection unit 10 from the track plan generated in step S101.

In step S103, the surroundings detection unit 10 (image processing control unit 150 of image processing apparatus 100 of the image processing apparatus) sets the registers 131 to 134 of the distance detection unit 130 based on the indication information output from the vehicle plan determination unit 30 in step S102 (for example, based the table 137 (see FIG. 4), the stereoscopic range selects the set value that best matches the requirements), changes the stereoscopic range, and performs the stereoscopy.

As described above, according to the first embodiment, the vehicle mounted system 1 mounted on the vehicle 2 includes the surroundings detection unit 10 that detects the observation target around the vehicle, the surroundings recognition unit 20 that recognizes the state around the vehicle based on the detection result, the vehicle plan determination unit 30 that generates the track plan of the vehicle based on the recognition result, and the vehicle control unit 40 that controls the behavior of the vehicle based on the track plan, and can control the range required for the stereoscopy of the surroundings detection unit 10 (image processing apparatus 100 of the surroundings detection unit 10) based on the track plan generated by vehicle plan determination unit 30, thereby reducing the processing time and providing the external detection device that detects the observation target around the vehicle at low cost.

<Second Embodiment>

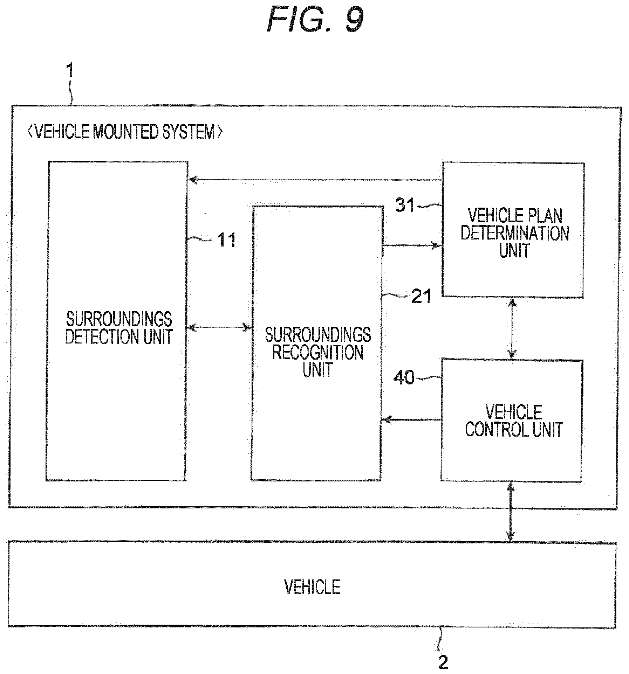

FIG. 9 is a configuration example of a vehicle mounted system 1 according to a second embodiment of the present invention. The vehicle mounted system 1 of the illustrated embodiment is configured to include a surroundings detection unit 11, a surroundings recognition unit 21, a vehicle plan determination unit 31, and a vehicle control unit 40, and is mounted on a vehicle 2. Since the vehicle control unit 40 according to the second embodiment is the same as that described in the first embodiment, the description thereof will be omitted below.

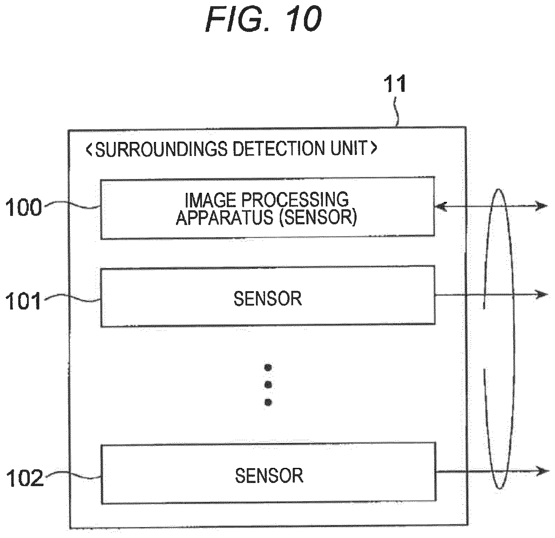

FIG. 10 is a diagram illustrating a configuration example of a surroundings detection unit 11 illustrated in FIG. 9. In this example, the surroundings detection unit 11 is constituted by a sensor group including a plurality of sensors 100 to 102 for detecting an observation target around (outside) the vehicle 2, including the image processing apparatus 100 described in the first embodiment. The sensors 101 and 102 are, for example, a camera (monocular camera and stereo camera), a millimeter-wave radar, a rider, and the like. Since each sensor 100 to 102 has a different detectable observation target, range, accuracy, cost, and the like, the surroundings detection unit 11 has a configuration in which the type or number of sensors differs depending on the vehicle type or option of the vehicle 2.

The surroundings detection unit 11 detects and recognizes the observation target around the vehicle 2 based on the information obtained from the plurality of sensors 100 to 102 including the image processing apparatus 100, and outputs the detection and recognition result to the surroundings recognition unit 21 as recognition information. Further, similar to the first embodiment, the surroundings detection unit 11 (image processing control unit 150 of the image processing apparatus 100 of the surroundings detection unit 11) sets the value in the registers 131 to 134 of the distance detection unit 130 based on the indication information output from the vehicle plan determination unit 31, thereby changing the stereoscopic range of the image processing apparatus 100 and controlling the processing load (processing time).

In the surroundings recognition unit 20 described in the first embodiment, the surroundings recognition unit 21 uses the detection results (detection information) of other sensors 101 and 102 in addition to the recognition information output from the image processing apparatus 100 as the information to be combined with the map information around the vehicle 2. The surroundings recognition unit 21 improves the accuracy of the surrounding environment information of the vehicle 2 by combining the information obtained from the plurality of sensors 100 to 102.

The vehicle plan determination unit 31 generates a track plan indicating at what track and speed the vehicle 2 is controlled based on the surrounding environment information of the vehicle 2 output from the surroundings recognition unit 21 and the state information of the vehicle 2 output from the vehicle control unit 40.

Furthermore, the vehicle plan determination unit 31 outputs the indication information for controlling the stereoscopic range (that is, processing load in the stereoscopy) to the surroundings detection unit 11 based on the track plan and the sensor configuration information of the surroundings detection unit 11 along with outputting the target control information to the vehicle control unit 40 based on the track plan. The sensor configuration information of the surroundings detection unit 11 is, for example, a type of sensor, a mounting position, a detection range, a resolution, and the like, and is information recorded in advance in a recording area.

In this way, in the vehicle mounted system 1 according to the second embodiment, the vehicle control unit 40 controls the behavior of the vehicle 2 based on the target control information output from the vehicle plan determination unit 31, the vehicle plan determination unit 31 generates the indication information that controls the processing load in stereoscopy based on the generated track plan of the vehicle 2 and the sensor configuration information of the surroundings detection unit 11, and the surroundings detection unit 11 (the image processing control unit 150 of the image processing apparatus 100 of the surroundings detection unit 11) sets values in the registers 131 to 134 of the distance detection unit 130 based on the indication information output from the vehicle plan determination unit 31 (for example, by selecting the set value that best matches the requirements of the stereoscopic range based on Table 137 (see FIG. 4)), thereby changing the stereoscopic range and controlling the processing load.

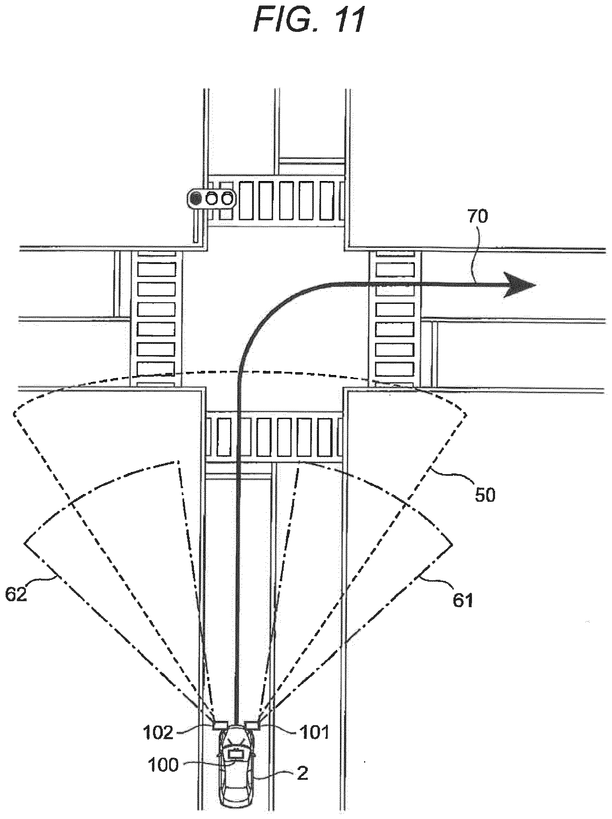

FIG. 11 illustrates an example in which the range in which the observation target can be detected by each sensor and the track 70 of the track plan generated by the vehicle plan determination unit 31 are shown in space, when the image processing apparatus 100 and other sensors 101 and 102 are mounted as the sensors of the surroundings detection unit 11. The stereoscopic possible range 50 in the image processing apparatus (sensor) 100 is a range in which the stereoscopy can be executed in principle using the image captured by the camera unit 110 of the image processing apparatus 100, and does not necessarily match a range that can be executed within the processing time required for the image processing apparatus 100. Since the range that can be executed within the required processing time depends on the processing performance of the image processing apparatus 100, it is effective to extract only the required range from the stereoscopic possible range 50 and perform the stereoscopy in order to reduce the product costs. In the present embodiment, in order to appropriately determine the range required for the stereoscopy of the image processing apparatus 100, the sensor configuration information of the surroundings detection unit 11 is used in addition to the track plan as described above.

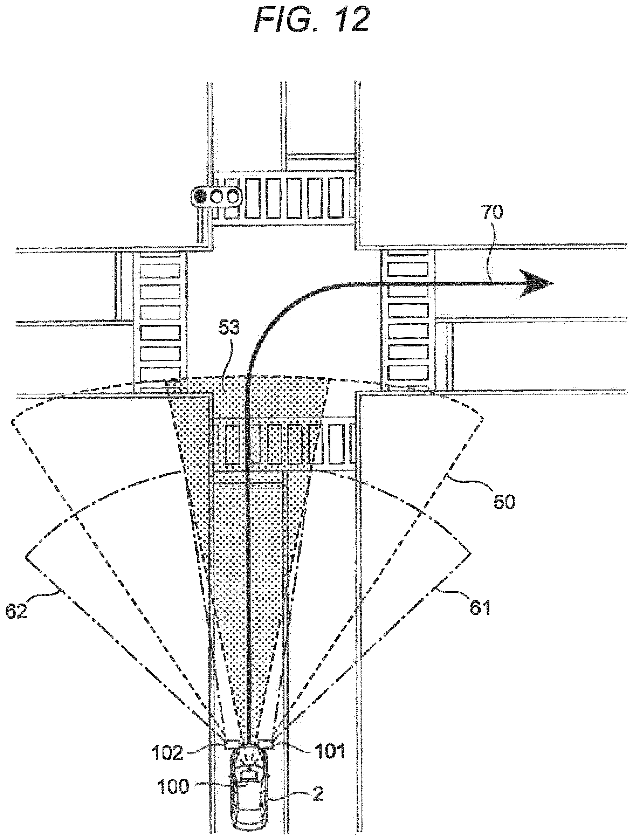

For example, when there is an overlap between the stereoscopic possible range 50 by the image processing apparatus 100 and ranges 61 and 62 that can be detected by the other sensors 101 and 102 as illustrated in FIG. 11, the image processing apparatus 100 (image processing control unit 150 of the image processing apparatus 100) sets the registers 131 to 134 of the distance detection unit 130, and narrows the stereoscopic range to a range 53 (in detail, the range from approximately a left and right center range of the stereoscopic possible range 50 to the farthest)including the traveling direction of the vehicle 2 avoiding the overlap with the ranges 61 and 62 in the stereoscopic possible range 50 as illustrated in FIG. 12, thereby reducing the processing timing required for the stereoscopy and allocating the processing time of the stereoscopy so that long-distance observation targets can also be detected.

Note that when the track plan generated by the vehicle plan determination unit 31 or the sensor configuration information (detection range, resolution, or the like) of the surroundings detection unit 11 is changed according to the surrounding environment or the like of the vehicle 2 while driving (for example, during driving assistance or automatic driving), the vehicle plan determination unit 31 outputs the indication information to the surroundings detection unit 11 according to the changed track plan or sensor configuration information, and the image processing apparatus 100 (image processing control unit 150 of the image processing apparatus) of the surroundings detection unit 11 can change/set the stereoscopic range based on the indication information output from the vehicle plan determination unit 31.

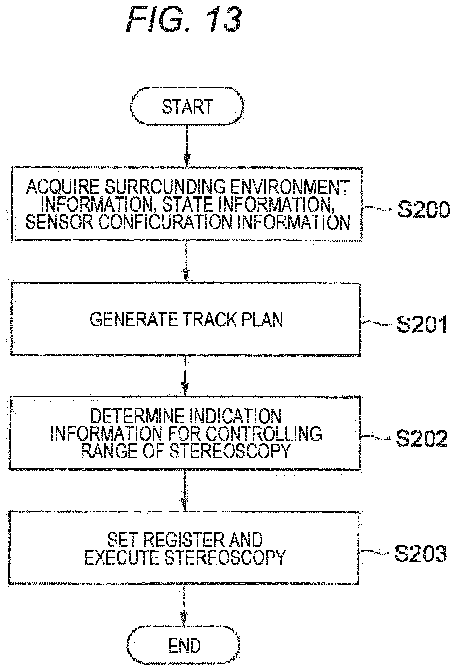

FIG. 13 is an example of a processing flow for controlling a processing load of stereoscopy in the vehicle mounted system 1 according to the second embodiment of the present invention.

In step S200, the vehicle plan determination unit 31 acquires the surrounding environment information of the vehicle 2 output from the surroundings recognition unit 21, the state information of the vehicle 2 output from the vehicle control unit 40, and the sensor configuration information of the surroundings detection unit 11.

In step S201, the vehicle plan determination unit 31 generates the track plan of the vehicle 2 from the information acquired in step S200.

In step S202, the vehicle plan determination unit 31 determines the indication information for controlling the stereoscopic range executed in the surroundings detection unit 11 from the track plan generated in step S201 and the sensor configuration information obtained in step S200.

In step S203, the surroundings detection unit 11 (image processing control unit 150 of the image processing apparatus 100 of the surroundings detection unit 11) sets the registers 131 to 134 of the distance detection unit 130 based on the indication information output from the vehicle plan determination unit 31 in step S202, thereby changing the stereoscopic range and executing the stereoscopy.

As described above, according to the second embodiment, the vehicle mounted system 1 mounted on the vehicle 2 includes the surroundings detection unit 11 that detects the observation target around the vehicle, the surroundings recognition unit 21 that recognizes the state around the vehicle based on the detection result, the vehicle plan determination unit 31 that generates the track plan of the vehicle based on the recognition result, and the vehicle control unit 40 that controls the behavior of the vehicle based on the track plan and the sensor configuration information of the surroundings detection unit 11, and can control the range required for the stereoscopy of the surroundings detection unit 11 (image processing apparatus 100 of the surroundings detection unit 11) based on the track plan generated by vehicle plan determination unit 31, thereby reducing the processing time and providing the external detection device suitable for various sensor configurations at low cost.

Note that in the above embodiment, the range required for the stereoscopy of the image processing apparatus 100 is determined by using the track plan generated by the vehicle plan determination unit 31 and the sensor configuration information of the surroundings detection unit 11, but only the sensor configuration information of the surroundings detection unit 11 may be used to determine the range required for the stereoscopy of the image processing apparatus 100.

<Third Embodiment>

Since a configuration example of a vehicle mounted system 1 according to a third embodiment of the present invention is the same as the second embodiment described above based on FIG. 9 and the like, only parts having a difference will be described below.

A surroundings detection unit 11 in the vehicle mounted system 1 of the present embodiment includes various sensors, and these sensors not only output the detection result or the recognition information of the observation target around the vehicle 2 to the surroundings recognition unit 21, but also outputs the detection result or the recognition information to the surroundings recognition unit 21 according to the reliability (hereinafter, sometimes referred to as the sensor reliability) for the detection result of the sensor itself. Since the reliability for the sensor is determined by, for example, periodic self-diagnosis, the reliability is always low when a permanent failure occurs, but the reliability is reduced only during the period when the problem occurs when the detection result temporarily deteriorates due to the adhesion of raindrops or the irradiation of the lights of oncoming vehicles. Further, the reliability for the sensor does not have to be uniform with respect to the sensor, and for example, the reliability may be set individually based on the detection accuracy of each observation target.

The surroundings recognition unit 21 uses the reliability output from various sensors in addition to the detection results and the recognition information as the information coupled to the map information around the vehicle 2. For example, when there is the sensor that outputs the high reliability and the sensor that outputs the low reliability for the same observation target, the surroundings recognition unit 21 selects the detection result of the sensor with high reliability, thereby improving the accuracy of the observation target included in the surrounding environment information of the vehicle 2. Further, as the reliability for the detection result of the sensor described above, for example, the surroundings recognition unit 21 may generate the reliability based on the history of the detection results without relying on the reliability output from the sensor. For example, when there is a sensor whose position or distance of the observation target takes the abnormal value in time series, the sensor may be treated as low reliability.

The vehicle plan determination unit 31 generates a track plan indicating at what track and speed the vehicle 2 is controlled based on the surrounding environment information of the vehicle 2 output from the surroundings recognition unit 21 and the state information of the vehicle 2 output from the vehicle control unit 40. Furthermore, the vehicle plan determination unit 31 outputs the indication information for controlling the stereoscopic range (that is, processing load in the stereoscopy) to the surroundings detection unit 11 based on the track plan and the sensor configuration information and the sensor reliability of the surroundings detection unit 11 along with outputting the target control information to the vehicle control unit 40 based on the track plan. As described above, the sensor reliability used to generate the indication information is the sensor reliability output from the surroundings detection unit 11 or the sensor reliability generated by the surroundings recognition unit 21 based on the detection result output from the sensor.

In this way, in the vehicle mounted system 1 according to the third embodiment, the vehicle control unit 40 controls the behavior of the vehicle 2 based on the target control information output from the vehicle plan determination unit 31, the vehicle plan determination unit 31 generates the indication information that controls the processing load in stereoscopy by comprehensively determining the generated track plan of the vehicle 2 and the sensor configuration information and the sensor reliability of the surroundings detection unit 11, and the surroundings detection unit 11 (image processing control unit 150 of the image processing apparatus 100 of the surroundings detection unit 11) sets values in the registers 131 to 134 of the distance detection unit 130 based on the indication information output from the vehicle plan determination unit 31 (for example, by selecting the set value that best matches the requirements of the stereoscopic range based on Table 137 (see FIG. 4)), thereby changing the stereoscopic range and controlling the processing load.

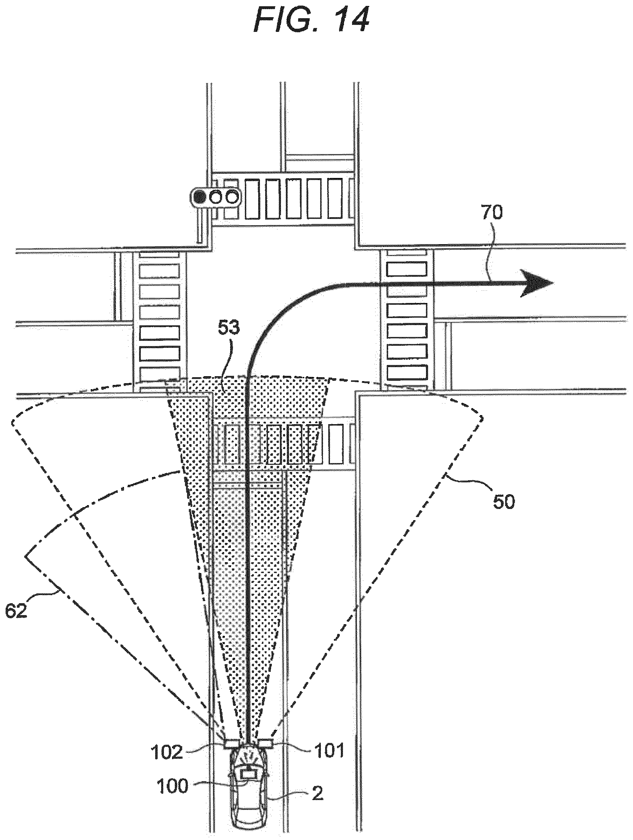

In the same sensor configuration as FIG. 12 and setting the stereoscopic range to the range 53, FIG. 14 illustrates an example in which the range in which the observation target can be detected by each sensor when the sensor 101 on the right side fails and the track 70 of the track plan generated by the vehicle plan determination unit 31 are shown in space. The stereoscopic possible range 50 in the image processing apparatus (sensor) 100 is a range in which the stereoscopy can be executed in principle using the image captured by the camera unit 110 of the image processing apparatus 100, and does not necessarily match a range that can be executed within the processing time required for the image processing apparatus 100. Since the range that can be executed within the required processing time depends on the processing performance of the image processing apparatus 100, it is effective to extract only the required range from the stereoscopic possible range 50 and perform the stereoscopy in order to reduce the product costs. In the present embodiment, in order to appropriately determine the range required for the stereoscopy of the image processing apparatus 100, the sensor configuration information and the sensor reliability of the surroundings detection unit 11 are used in addition to the track plan as described above.

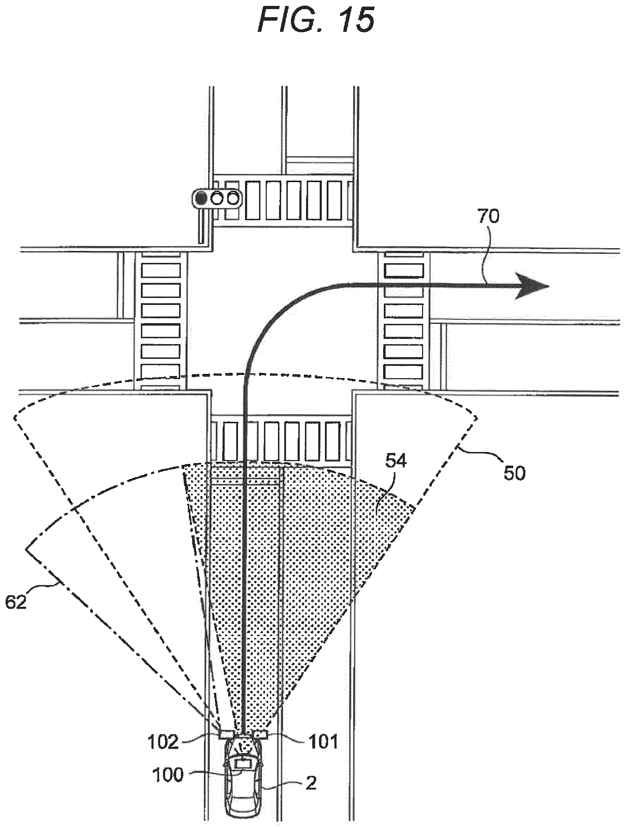

For example, in the situation illustrated in FIG. 14 where the sensor 101 has failed and its reliability is reduced, the image processing apparatus 100 (image processing control unit 150 of the image processing apparatus 100) sets the registers 131 to 134 of the distance detection unit 130 and changes the stereoscopic range to a range 54 (specifically, a range from the right end to the center of the stereoscopic possible range 50) including the traveling direction of vehicle 2 illustrated in FIG. 15 and allocating the processing time of the stereoscopy, so the range to be detected by the sensor 101 with low reliability can be replaced by the image processing apparatus (sensor) 100 with high reliability. In this case, in order to make the processing time equivalent (in other words, suppress the increase) or reduce the processing time, the observation target at a long distance is excluded from the detection target. In this case, by switching the range 53 (range including a short distance and a long distance) illustrated in FIG. 14 and the range 54 (range including a short distance) illustrated in FIG. 15 in time series (for example, for each frame), the image processing apparatus 100 may be controlled so that both ranges can be stereoscopy.

Note that when the track plan generated by the vehicle plan determination unit 31 or the sensor configuration information (detection range, resolution, or the like) and the sensor reliability of the surroundings detection unit 11 are changed according to the surrounding environment or the like of the vehicle 2 while driving (for example, during driving assistance or automatic driving), the vehicle plan determination unit 31 outputs the indication information to the surroundings detection unit 11 according to the changed track plan, sensor configuration information, or sensor reliability, and the image processing apparatus 100 (image processing control unit 150 of the image processing apparatus) of the surroundings detection unit 11 can change/set the stereoscopic range based on the indication information output from the vehicle plan determination unit 31.

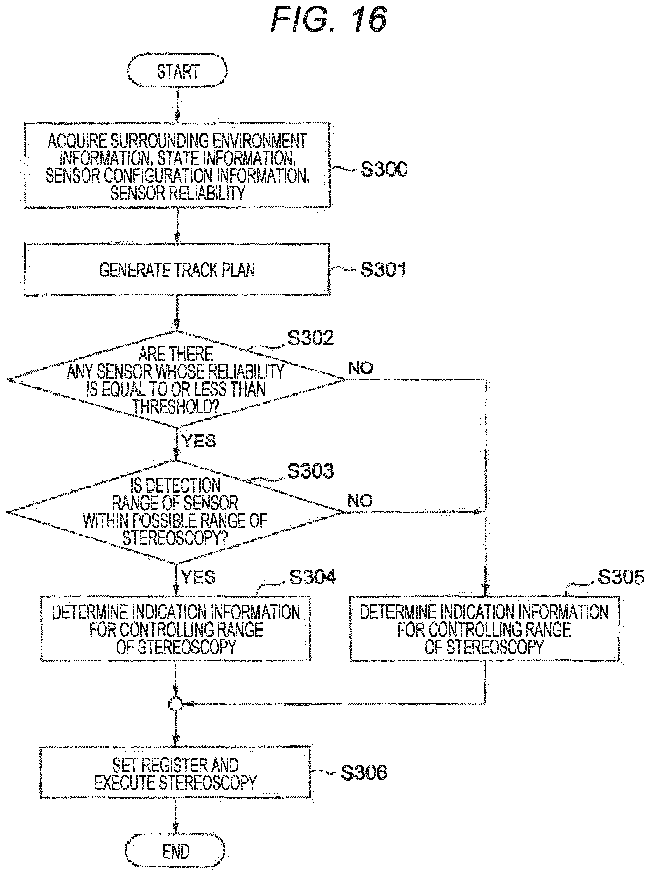

FIG. 16 is an example of a processing flow for controlling a processing load of stereoscopy in the vehicle mounted system 1 according to the third embodiment of the present invention.

In step S300, the vehicle plan determination unit 31 acquires the surrounding environment information of the vehicle 2 output from the surroundings recognition unit 21, the state information of the vehicle 2 output from the vehicle control unit 40, and the sensor configuration information and the sensor reliability of the surroundings detection unit 11.

In step S301, the vehicle plan determination unit 31 generates the track plan of the vehicle 2 from the information acquired in step S300.

In step S302, the vehicle plan determination unit 31 determines the presence or absence of a sensor whose sensor reliability obtained in step S300 is equal to or less than a threshold value. When there is a sensor whose sensor reliability is equal to or less than the threshold value (step S302: Yes), the process proceeds to step S303, and when there is no sensor whose sensor reliability is equal to or less than the threshold value (step S302: No), the process proceeds to step S305.

In step S303, the vehicle plan determination unit 31 determines whether or not the detection range of the sensor whose sensor reliability is equal to or less than the threshold value is within the stereoscopic possible range. If the detection range of the sensor is within the stereoscopic possible range (step S303: Yes), the process proceeds to step S304, and if the detection range of the sensor is not within the stereoscopic possible range (step S303: No), the process proceeds to step S305.

In step S304, the vehicle plan determination unit 31 determines the indication information for controlling the stereoscopic range executed in the surroundings detection unit 11 from the track plan generated in step S301 and the sensor configuration information and the sensor reliability of the surroundings detection unit 11 obtained in step S300.

On the other hand, similar to the second embodiment, in step S305, the vehicle plan determination unit 31 determines the indication information for controlling the stereoscopic range executed in the surroundings detection unit 11 from the track plan generated in step S301 and the sensor configuration information of the surroundings detection unit 11 obtained in step S300.

In step S306, the surroundings detection unit 11 (image processing control unit 150 of the image processing apparatus 100 of the surroundings detection unit 11) sets the registers 131 to 134 of the distance detection unit 130 based on the indication information output from the vehicle plan determination unit 31, thereby changing the stereoscopic range and executing the stereoscopy.

As described above, according to the third embodiment, the vehicle mounted system 1 mounted on the vehicle 2 includes the surroundings detection unit 11 that detects the observation target around the vehicle, the surroundings recognition unit 21 that recognizes the state around the vehicle based on the detection result, the vehicle plan determination unit 31 that generates the track plan of the vehicle based on the recognition result, and the vehicle control unit 40 that controls the behavior of the vehicle based on the track plan, the sensor configuration information and the sensor reliability (reliability for the detection result) of the surroundings detection unit 11, and can control the range required for the stereoscopy of the surroundings detection unit 11 (image processing apparatus 100 of the surroundings detection unit 11) based on the track plan generated by vehicle plan determination unit 31, thereby reducing or suppressing the increase in the processing time and providing the external detection device suitable for various sensor configurations and states at low cost.

Note that in the above embodiment, the range required for the stereoscopy of the image processing apparatus 100 is determined by using the track plan generated by the vehicle plan determination unit 31 and the sensor configuration information and the sensor reliability of the surroundings detection unit 11, but only the sensor reliability of the surroundings detection unit 11 may be used to determine the range required for the stereoscopy of the image processing apparatus 100.

The above-described embodiments are examples for describing the present invention, and the scope of the present invention is not limited to the embodiments. Those skilled in the art can practice the present invention in various other aspects without departing from the gist of the present invention.

Note that the present invention is not limited to the above-described embodiments, and includes various modified forms. For example, the above-described embodiments have been described in detail in order to explain the present invention in an easy-to-understand manner, and are not necessarily limited to those having all the described configurations. Further, it is possible to replace a part of the configuration of one embodiment with the configuration of other embodiments, and it is also possible to add the configuration of another embodiment to the configuration of one embodiment. Further, for some of the configurations of each embodiment, it is possible to add, delete, or replace other configurations.

In addition, a part or all of each configuration, functions, processing units, control units, and the like described above may be designed with, for example, an integrated circuit and thus may be realized by hardware. Further, each of the above configurations, functions, and the like may be realized by software by allowing the processor to interpret and execute a program that realizes each function. Information such as programs, tables, and files that realize each function can be stored in a memory, a hard disk, a storage device such as a solid state drive (SSD), or a recording medium such as an IC card, an SD card, or a DVD.

Further, control lines or information lines are shown as necessary for explanation, and all the control lines or information lines are not necessarily shown on products. In practice, it may be considered that almost all configurations are interconnected.

Reference Signs List

1 vehicle mounted system
2 vehicle
10, 11 surroundings detection unit
20, 21 surroundings recognition unit
30, 31 vehicle plan determination unit
40 vehicle control unit
50 stereoscopic possible range
51 to 54 changed stereoscopic range
61, 62 detectable range of sensor
70 track of track plan
100 image processing apparatus (sensor)
101, 102 sensor
110A, 110B camera unit
120 image correction unit
130 distance detection unit
131 to 134 register
135 pixel block search unit
136 distance calculation unit
137 table
140 image recognition unit
150 image processing control unit

**Claims**

1. A vehicle mounted system, comprising:

a surroundings detection unit that is equipped with at least one sensor that detects an observation target around the vehicle;
a surroundings recognition unit that recognizes a surrounding environment of the vehicle based on the detection result of the surroundings detection unit;
a vehicle plan determination unit that generates a track plan of the vehicle based on the recognition result of the surroundings recognition unit; and
a vehicle control unit that controls a behavior of the vehicle based on the track plan of the vehicle plan determination unit;
wherein the surroundings detection unit includes an image processing apparatus that detects the observation target by a stereoscopy as the sensor, and
the image processing apparatus changes a stereoscopic range based on at least one of the track plan of the vehicle plan determination unit, sensor configuration information of the surroundings detection unit, or sensor reliability for the detection result of the surroundings detection unit.

2. The vehicle mounted system according to claim 1, wherein
the vehicle plan determination unit generates indication information based on the track plan of the vehicle, and the image processing apparatus changes the stereoscopic range based on the indication information of the vehicle plan determination unit.

3. The vehicle mounted system according to claim 1, wherein
the vehicle plan determination unit generates indication information based on a detection range of the surroundings detection unit, and the image processing apparatus changes the stereoscopic range based on the indication information of the vehicle plan determination unit.

4. The vehicle mounted system according to claim 1, wherein
the vehicle plan determination unit generates indication information based on the sensor reliability for the detection result of the surroundings detection unit, and the image processing apparatus changes the stereoscopic range based on the indication information of the vehicle plan determination unit.

5. The vehicle mounted system according to claim 4, wherein
the image processing apparatus changes the stereoscopic range to replace the detection range of the sensor whose reliability is lower than that of the image processing apparatus.

6. The vehicle mounted system according to claim 1, wherein
the image processing apparatus selects a predetermined set value from a table including a plurality of set values to change the stereoscopic range.

7. A vehicle mounted system, comprising:

a surroundings detection unit that is equipped with at least one sensor that detects an observation target around the vehicle;
a surroundings recognition unit that recognizes a surrounding environment of the vehicle based on the detection result of the surroundings detection unit;
a vehicle plan determination unit that generates a track plan of the vehicle based on the recognition result of the surroundings recognition unit; and
a vehicle control unit that controls a behavior of the vehicle based on the track plan of the vehicle plan determination unit,
wherein the surroundings detection unit includes an image processing apparatus that detects the observation target by a stereoscopy as the sensor, and
the vehicle plan determination unit generates indication information based on at least one of the track plan of the vehicle, sensor configuration information of the surroundings detection unit, or sensor reliability for the detection result of the surroundings detection unit while the vehicle control unit controls a behavior of the vehicle, and
the image processing apparatus changes a stereoscopic range based on the indication information of the vehicle plan determination unit.

# FIG. 1

EP 3 865 815 A1

*FIG. 2*

13

## FIG. 3

130

<DISTANCE DETECTION UNIT>

| | |
|---|---|
| 131 | |
| REGISTER (REDUCTION RATE) | |
| 132 | |
| REGISTER (POSITION AND SIZE OF AREA) | |
| 133 | |
| REGISTER (SEARCH WIDTH) | |
| 134 | |
| REGISTER (SEARCH PIXEL PITCH) | |

135
PIXEL BLOCK SEARCH UNIT

136
DISTANCE CALCULATION UNIT

# FIG. 4

137

| # | REDUCTION RATE | POSITION AND SIZE OF AREA | SEARCH WIDTH | SEARCH PIXEL PITCH | PROCESSING TIME |
|---|---|---|---|---|---|
| 1 | S1 | H1xV1 | W1 | P1 | T1 |
| 2 | S2 | H2xV2 | W2 | P2 | T2 |
| 3 | S3 | H3xV3 | W3 | P3 | T3 |
| ⋮ | ⋮ | ⋮ | ⋮ | ⋮ | ⋮ |

# FIG. 5

## FIG. 6

## FIG. 7

# FIG. 8

```
        ┌─────────────┐
        │    START    │
        └─────────────┘
               │
               ▼
   ┌───────────────────────────────┐
   │ ACQUIRE SURROUNDING ENVIRONMENT│ ～S100
   │ INFORMATION AND STATE INFORMATION│
   └───────────────────────────────┘
               │
               ▼
   ┌───────────────────────────────┐
   │      GENERATE TRACK PLAN       │ ～S101
   └───────────────────────────────┘
               │
               ▼
   ┌───────────────────────────────┐
   │ DETERMINE INDICATION INFORMATION│
   │  FOR CONTROLLING PROCESSING    │ ～S102
   │     LOAD OF STEREOSCOPY        │
   └───────────────────────────────┘
               │
               ▼
   ┌───────────────────────────────┐
   │      SET REGISTER AND          │ ～S103
   │    EXECUTE STEREOSCOPY         │
   └───────────────────────────────┘
               │
               ▼
        ┌─────────────┐
        │     END     │
        └─────────────┘
```

## FIG. 9

## FIG. 10

## FIG. 11

# FIG. 12

# FIG. 13

```
          ┌──────────┐
          │  START   │
          └──────────┘
               │
               ▼
┌─────────────────────────────────────┐
│  ACQUIRE SURROUNDING ENVIRONMENT     │
│  INFORMATION, STATE INFORMATION,     │──── S200
│  SENSOR CONFIGURATION INFORMATION    │
└─────────────────────────────────────┘
               │
               ▼
┌─────────────────────────────────────┐
│                                      │
│        GENERATE TRACK PLAN           │──── S201
│                                      │
└─────────────────────────────────────┘
               │
               ▼
┌─────────────────────────────────────┐
│       DETERMINE INDICATION           │
│   INFORMATION FOR CONTROLLING        │──── S202
│      RANGE OF STEREOSCOPY            │
└─────────────────────────────────────┘
               │
               ▼
┌─────────────────────────────────────┐
│       SET REGISTER AND               │
│     EXECUTE STEREOSCOPY              │──── S203
│                                      │
└─────────────────────────────────────┘
               │
               ▼
          ┌──────────┐
          │   END    │
          └──────────┘
```

## FIG. 14

## FIG. 15

# FIG. 16

```
            ┌─────────────┐
            │    START    │
            └──────┬──────┘
                   │
                   ▼
   ┌──────────────────────────────────┐
   │ ACQUIRE SURROUNDING ENVIRONMENT  │
   │   INFORMATION, STATE INFORMATION,│─── S300
   │ SENSOR CONFIGURATION INFORMATION,│
   │       SENSOR RELIABILITY         │
   └────────────────┬─────────────────┘
                    │
                    ▼
   ┌──────────────────────────────────┐
   │        GENERATE TRACK PLAN       │─── S301
   └────────────────┬─────────────────┘
                    │
                    ▼            S302
          ╱─────────────────────╲
         ╱      ARE THERE         ╲
        ╱ ANY SENSOR WHOSE RELIABILITY╲   NO
        ╲  IS EQUAL TO OR LESS THAN   ╱──────────┐
         ╲      THRESHOLD?         ╱             │
          ╲───────────┬──────────╱               │
                   YES │                          │
                       ▼            S303          │
          ╱─────────────────────╲                │
         ╱      IS DETECTION      ╲               │
        ╱   RANGE OF SENSOR        ╲    NO         │
        ╲ WITHIN POSSIBLE RANGE OF ╱──────────────┤
         ╲     STEREOSCOPY?       ╱               │
          ╲───────────┬──────────╱                │
                   YES │   S304               S305│
                       ▼                          ▼
   ┌──────────────────────────┐   ┌──────────────────────────┐
   │ DETERMINE INDICATION     │   │ DETERMINE INDICATION     │
   │ INFORMATION FOR          │   │ INFORMATION FOR          │
   │ CONTROLLING RANGE        │   │ CONTROLLING RANGE        │
   │ OF STEREOSCOPY           │   │ OF STEREOSCOPY           │
   └────────────┬─────────────┘   └────────────┬─────────────┘
                │                                │
                └──────────►(○)◄────────────────┘
                             │
                             ▼
   ┌──────────────────────────┐
   │     SET REGISTER AND     │─── S306
   │   EXECUTE STEREOSCOPY    │
   └────────────┬─────────────┘
                │
                ▼
            ┌───────┐
            │  END  │
            └───────┘
```

# FIG. 17

$P=(xd,zd)$  $P'=(xd',zd')$

$xd'=xd-b$
$zd'=zd$

$Pl=(xl,f)$

$Pr=(xr,f)$

$z$  $z'$

$x$  $x'$

$b$

## INTERNATIONAL SEARCH REPORT

| | International application No. |
|---|---|
| | PCT/JP2019/036911 |

**A. CLASSIFICATION OF SUBJECT MATTER**
Int.Cl. G01C3/06(2006.01)i, B60W40/02(2006.01)i, G06T7/00(2017.01)i, G06T7/593(2017.01)i, G08G1/16(2006.01)i

According to International Patent Classification (IPC) or to both national classification and IPC

**B. FIELDS SEARCHED**

Minimum documentation searched (classification system followed by classification symbols)
Int.Cl. G01C3/06, B60W40/02, G06T7/00, G06T7/593, G08G1/16, H04N5/232, H04N5/225, G01C21/26

Documentation searched other than minimum documentation to the extent that such documents are included in the fields searched
Published examined utility model applications of Japan     1922–1996
Published unexamined utility model applications of Japan    1971–2019
Registered utility model specifications of Japan       1996–2019
Published registered utility model applications of Japan     1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2017/145945 A1 (KYOCERA CORP.) 31 August 2017, paragraphs [0002]-[0076], fig. 1-7 & US 2019/0017819 A1, paragraphs [0002]-[0084], fig. 1-7 & CN 108700414 A | 1-3, 6-7<br>1, 4-5, 7 |
| Y | JP 10-105863 A (OKI ELECTRIC INDUSTRY CO., LTD.) 24 April 1998, paragraphs [0001]-[0023], fig. 1-5 (Family: none) | 1, 4-5, 7 |
| P, X | WO 2019/073526 A1 (FAIRCHILD INDUSTRIES, INC.) 18 April 2019, paragraphs [0001]-[0149], fig. 1-10B (Family: none) | 1-2, 6-7 |

☒   Further documents are listed in the continuation of Box C.     ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 December 2019 (18.12.2019) | 07 January 2020 (07.01.2020) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2019/036911 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2008-298532 A (KONICA MINOLTA HOLDINGS, INC.) 11 December 2008, entire text, all drawings (Family: none) | 1-7 |
| A | US 2018/0107225 A1 (DENSO INTERNATIONAL AMERICA, INC., DENSO CORPORATION) 19 April 2018, entire text, all drawings (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017129543 A